# EUROPEAN PATENT APPLICATION

(11) **EP 4 848 164 A2**
(43) Date of publication of application: **02.12.2026**
(21) Application number: 26205951.2
(22) Date of filing: 18.09.2026
(51) Int. Cl.: G06Q 10/00

(54) **METHOD AND APPARATUS FOR GENERATING ENVIRONMENT MAINTENANCE STRATEGY, DEVICE, AND STORAGE MEDIUM**

(30) Priority: 13.08.2026 SG 10202602822Y
(71) Applicant: XG TECH PTE. LTD., Singapore 179098 (SG)
(72) Inventor: LIN, Tao, Singapore 179098 (SG); HUANG, Jingchang, Singapore 179098 (SG)
(74) Representative: Patentanwälte Magenbauer & Kollegen Partnerschaft mbB

(57) **Abstract**

The present disclosure provides a method and an apparatus for generating an environment maintenance strategy, a device, and a storage medium. The method includes: acquiring (S210) an environment layout map corresponding to an environment to be maintained; mapping (S220) a historical pollution event occurring in the environment to be maintained onto the environment layout map, to obtain a historical pollution region in the environment to be maintained and a pollution pattern corresponding to the historical pollution region, where the pollution pattern includes at least one of a pollution type pattern, a pollution frequency pattern, a pollution weather pattern, and a pollution time pattern; and generating (S230), based on the pollution pattern, an environment maintenance strategy for the environment to be maintained.

## Description

### TECHNICAL FIELD

The present disclosure relates to the technical field of cleaning devices, and in particular, to a method and an apparatus for generating an environment maintenance strategy, a device, and a storage medium.

### BACKGROUND

With rapid development of smart home technologies, cleaning devices have become the core devices for smart home cleaning. A cleaning device can achieve autonomous indoor navigation and automatic floor cleaning through technologies such as machine vision. If a pollution region is detected within its field of view, the cleaning device cleans the pollution region. If no pollution region is detected, the cleaning device navigates along a preset route.

In the prior art, a cleaning device needs to traverse the entire indoor environment again to detect the pollution region whenever it is started, lacking the capability to store and remember the indoor environment for a long time. As a result, it cannot perform targeted cleaning of regions where pollution occurs frequently, reducing pollution cleaning efficiency.

### SUMMARY

To solve the above technical problems, embodiments of the present disclosure provide a method and an apparatus for generating an environment maintenance strategy, a device, and a storage medium, to resolve the problem that a cleaning device cannot perform targeted cleaning of high-frequency pollution regions.

According to a first aspect of the present disclosure, there is provided a method for generating an environment maintenance strategy, including:
acquiring an environment layout map corresponding to an environment to be maintained;
mapping a historical pollution event occurring in the environment to be maintained onto the environment layout map, to obtain a historical pollution region in the environment to be maintained and a pollution pattern corresponding to the historical pollution region, wherein the pollution pattern includes at least one of a pollution type pattern, a pollution frequency pattern, a pollution weather pattern, and a pollution time pattern; and
generating, based on the pollution pattern, an environment maintenance strategy for the environment to be maintained, wherein the environment maintenance strategy includes at least one of a cleaning strategy and an inspection strategy.

According to a second aspect of the present disclosure, there is provided an apparatus for generating an environment maintenance strategy, including:
an acquisition module, configured for acquiring an environment layout map corresponding to an environment to be maintained;
an event mapping module, configured for mapping a historical pollution event occurring in the environment to be maintained onto the environment layout map, to obtain a historical pollution region in the environment to be maintained and a pollution pattern corresponding to the historical pollution region, wherein the pollution pattern includes at least one of a pollution type pattern, a pollution frequency pattern, a pollution weather pattern, and a pollution time pattern; and
a strategy generation module, configured for generating, based on the pollution pattern, an environment maintenance strategy for the environment to be maintained, wherein the environment maintenance strategy includes at least one of a cleaning strategy and an inspection strategy.

According to a third aspect of the present disclosure, there is provided a computer readable storage medium, on which a computer program is stored, wherein the computer program is used for performing the method for generating an environment maintenance strategy according to the embodiment of the first aspect of the present disclosure.

According to a fourth aspect of the present disclosure, there is provided an electronic device, including:
a processor; and
a memory, configured for storing instructions executable by the processor, wherein
the processor is configured for reading the executable instructions from the memory, and executing the instructions to implement the method for generating an environment maintenance strategy according to the embodiment of the first aspect of the present disclosure.

According to a fifth aspect of the present disclosure, there is provided a computer program product, wherein when instructions in the computer program product are executed by a processor, the method for generating an environment maintenance strategy according to the embodiment of the first aspect of the present disclosure is performed.

The embodiments of the present disclosure provide a method and an apparatus for generating an environment maintenance strategy, a device, and a storage medium. First, an environment layout map corresponding to an environment to be maintained is acquired. Then, a historical pollution event occurring in the environment to be maintained is mapped onto the environment layout map, to obtain a historical pollution region and corresponding pollution pattern, wherein the pollution pattern includes at least one of a pollution type pattern, a pollution frequency pattern, a pollution weather pattern, and a pollution time pattern. Finally, an environment maintenance strategy for the environment to be maintained is generated based on the pollution pattern. Mapping the historical pollution event onto an environment layout map and analyzing a pollution pattern allow a cleaning device to have a long-term environmental learning and memory capability, achieving targeted cleaning of high-frequency pollution regions, dynamic inspection optimization, and generation of preventive maintenance strategies, thereby resolving a problem that the prior cleaning devices lack long-term environmental memory and consequently have low cleaning efficiency and a low degree of intelligence, and improving cleaning efficiency and a degree of intelligence of the cleaning device.

### BRIEF DESCRIPTION OF DRAWINGS

FIG. 1 is a schematic diagram illustrating an architecture of a cleaning system according to an embodiment of the present disclosure;
FIG. 2 is a schematic flowchart illustrating a method for generating an environment maintenance strategy according to an exemplary embodiment of the present disclosure;
FIG. 3 is a schematic flowchart illustrating step S220 of a method for generating an environment maintenance strategy according to an exemplary embodiment of the present disclosure;
FIG. 4 is a schematic flowchart illustrating step S224 of a method for generating an environment maintenance strategy according to an exemplary embodiment of the present disclosure;
FIG. 5 is a first schematic flowchart illustrating step S230 of a method for generating an environment maintenance strategy according to an exemplary embodiment of the present disclosure;
FIG. 6 is a second schematic flowchart illustrating step S230 of a method for generating an environment maintenance strategy according to an exemplary embodiment of the present disclosure;
FIG. 7 is a third schematic flowchart illustrating step S230 of a method for generating an environment maintenance strategy according to an exemplary embodiment of the present disclosure;
FIG. 8 is a fourth schematic flowchart illustrating step S230 of a method for generating an environment maintenance strategy according to an exemplary embodiment of the present disclosure;
FIG. 9 is a fifth schematic flowchart illustrating step S230 of a method for generating an environment maintenance strategy according to an exemplary embodiment of the present disclosure;
FIG. 10 is a sixth schematic flowchart illustrating step S230 of a method for generating an environment maintenance strategy according to an exemplary embodiment of the present disclosure;
FIG. 11 is a schematic flowchart before step S220 of a method for generating an environment maintenance strategy according to an exemplary embodiment of the present disclosure;
FIG. 12 is a schematic diagram illustrating a structure of an apparatus for generating an environment maintenance strategy according to an exemplary embodiment of the present disclosure; and
FIG. 13 is a diagram illustrating a structure of an electronic device according to an embodiment of the present disclosure.

### DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

### Overview of Application

In the field of smart home technologies, a cleaning device (such as a robotic vacuum cleaner or a robotic vacuum and mop) can autonomously plan a route to clean an indoor floor environment. However, current cleaning devices can perform cleaning only based on fixed modes, such as using fixed suction power, fixed cleaning routes, and fixed inspection frequencies, and cannot adapt to differentiated pollution conditions in different regions, resulting in low cleaning efficiency.

Specifically, due to a lack of long-term environmental memory, prior cleaning devices typically inspect and clean all indoor regions based on a specified inspection route whenever they are started. However, within an indoor region, there are regions that remain clean for a long time and regions where pollution occurs frequently. If the cleaning device inspects and cleans the regions that remain clean for a long time every time it is started, this undoubtedly wastes unnecessary inspection power consumption, and at the same time affects timeliness of inspecting and cleaning the regions where pollution occurs frequently, reducing cleaning efficiency.

In view of the above problems, embodiments of the present disclosure provide a method for generating an environment maintenance strategy. In this method, a historical pollution event is mapped onto an environment layout map, at least one of a pollution type pattern, a pollution frequency pattern, a pollution weather pattern, and a pollution time pattern is obtained through analysis, and an environment maintenance strategy is dynamically generated based on at least one pollution pattern, enabling a cleaning device to have a long-term environmental learning and memory capability, and allowing it to perform targeted cleaning of high-frequency pollution regions and dynamically optimize an inspection strategy, thereby resolving a problem that the prior cleaning devices lack long-term environmental memory and consequently have low cleaning efficiency and a low degree of intelligence, and improving cleaning efficiency and a degree of intelligence of the cleaning device.

### Exemplary System

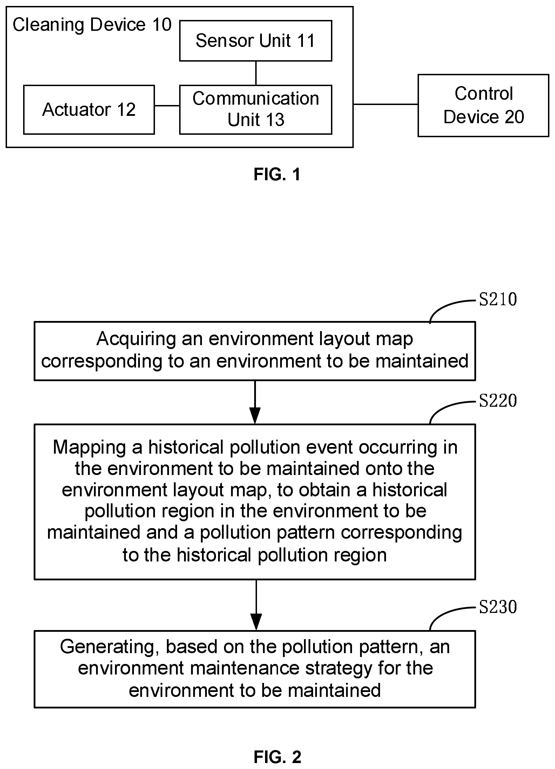

FIG. 1 is a schematic diagram illustrating an architecture of a cleaning system according to an embodiment of the present disclosure. As shown in FIG. 1, the method for generating an environment maintenance strategy provided in the embodiments of the present disclosure may be applied to a cleaning system. The system includes a cleaning device 10 and a control device 20. The cleaning device 10 may perform a cleaning task and collect environmental data in an environment to be maintained. The environment to be maintained is a region that the cleaning device 10 is responsible for inspecting and cleaning.

The control device 20 may exchange data with the cleaning device 10, for example, receiving environmental data collected by the cleaning device 10, constructing an environment layout map based on the environmental data collected by the cleaning device 10, recording a historical pollution event, generating an environment maintenance strategy, and sending a maintenance instruction to the cleaning device 10.

In an implementation, the cleaning device 10 may be a robotic vacuum cleaner, a robotic mop, a vacuum-and-mop robot, a cleaning service robot, or the like. The cleaning device 10 may include a sensor unit 11 and an actuator 12. The sensor unit 11 may include at least one of a vision sensor, a ranging sensor, an inertial sensor, and a status sensor.

The vision sensor may be, for example, a color (Red Green Blue, RGB) camera, a depth camera, or a panoramic camera, for capturing an environmental image of the environment to be maintained. The ranging sensor may be, for example, LiDAR, millimeter-wave radar, or a ToF (Time-Of-Flight) sensor, for measuring a distance between the cleaning device 10 and an object in the environment to be maintained, and for constructing, through a SLAM (Simultaneous Localization And Mapping) algorithm, a two-dimensional navigation map of the environment to be maintained. The inertial sensor may be, for example, an IMU (inertial Measurement Unit), or an odometer, for pose estimation and dead reckoning of the cleaning device 10. The status sensor may be, for example, a cliff sensor, a collision sensor, or a dustbin-full sensor, for monitoring a status of the cleaning device 10 and provide safety protection. The actuator 12 includes a travel drive and a cleaning mechanism, wherein the travel drive may be, for example, a drive wheel or a swivel caster, and the cleaning mechanism may include, for example, at least one of a roller brush, a side brush, a suction motor, a mopping cloth, and a water pump.

In an implementation, the control device 20 may be deployed on a cloud server or a local device. The local device may be, for example, an AI PC (Artificial Intelligence Personal Computer), a smart speaker, or a home gateway. An object detection model, such as a YOLO (You Only Look Once) model or a GroundingDINO vision-language model, may be deployed on the control device 20, for detecting information such as a type, a position, and an area of a pollutant from an environmental image. An LLM (Large Language Model) may also be deployed on the control device 20, for performing tasks such as semantic analysis of historical pollution data, feature extraction of a pollution pattern, and generation of an environment maintenance strategy.

In an implementation, the cleaning device 10 may further include a communication unit 13, for supporting wired or wireless network communication modes such as Ethernet, Wi-Fi (Wireless Fidelity), and Bluetooth, so as to exchange data with the control device 20.

### Exemplary Method

FIG. 2 is a schematic flowchart illustrating a method for generating an environment maintenance strategy according to an exemplary embodiment of the present disclosure. This embodiment may be applied to a cleaning device, or may be performed cooperatively by a control device and a cleaning device. The technical solution of the present disclosure is described in detail below by using an example in which an execution body is a cleaning device.

As shown in FIG. 2, the method for generating an environment maintenance strategy provided in this embodiment of the present disclosure includes the following steps:
S210: Acquiring an environment layout map corresponding to an environment to be maintained.

The environment to be maintained refers to a target region in which the cleaning device needs to perform an environment maintenance task. In an implementation, the environment to be maintained may include a floor region of a place such as a home, an office, a shopping mall, a restaurant, or a hospital. The environment layout map refers to map data reflecting a spatial structure of the environment to be maintained.

In some examples, the environment layout map may be constructed by a sensor unit mounted on the cleaning device. Specifically, during inspection of the environment to be maintained upon first startup, the cleaning device may collect, through sensors such as LiDAR and an RGB camera, geometric information and visual information of the environment to be maintained, and construct, through a SLAM algorithm, the environment layout map of the environment to be maintained.

In an implementation, the environment layout map may be a two-dimensional navigation map, which may include information such as room boundaries, wall positions, obstacle positions, and passable regions, forming a spatial structure representation of the environment to be maintained.

In some examples, the environment layout map may further include semantic information. That is, semantic labels such as a furniture position (for example, a sofa, a dining table, or a bed), a carpeted region, and a pet activity region (for example, a cat litter box or a pet bed) are recorded through manual annotation or automatic identification using a large language model, such as a VLM (vision language model). A semantic region map of the environment to be maintained can be obtained by adding semantic labels to the environment layout map, facilitating subsequent implementation of differentiated environment maintenance strategies for different types of regions. For example, a region around a cat litter box typically has a relatively high pollution frequency, a region under a dining table is prone to food residues after meals, and an entryway region is prone to water accumulation on rainy days.

S220: Mapping a historical pollution event occurring in the environment to be maintained onto the environment layout map, to obtain a historical pollution region in the environment to be maintained and a pollution pattern corresponding to the historical pollution region.

In some examples, a historical pollution event refers to a pollution occurrence event detected and recorded by the cleaning device during performance of a cleaning task in the past. The historical pollution event may include information such as a type of a pollution event, position coordinates of a pollution region, a pollution area, a time of occurrence, and a weather condition at the time of occurrence.

In some examples, a pollution pattern refers to regular information obtained based on statistical analysis of the historical pollution event and reflecting pollution occurrence characteristics in the environment to be maintained.

In some examples, the pollution pattern includes at least one of a pollution type pattern, a pollution frequency pattern, a pollution weather pattern, and a pollution time pattern. The pollution type pattern reflects types of pollutants that frequently occur in different regions, for example, a particulate pollution type (such as cat litter, or food residues), a liquid pollution type (such as water stains or beverages), and an adherent pollution type (such as vomit or pet excrement). The pollution frequency pattern reflects a frequency at which a pollution event occurs in different regions per unit time. The pollution weather pattern reflects a probability that a pollution event occurs under different weather conditions. The pollution time pattern reflects a probability that a pollution event occurs at different times of the day.

In an implementation, mapping the historical pollution event onto the environment layout map may be specifically marking an occurrence position of each historical pollution event at corresponding coordinate on the environment layout map. A distribution map of historical pollution region in the environment to be maintained is formed through cumulative marking of a large number of historical pollution events. The historical pollution region refers to a region, in which a pollution event has occurred in the past, in the environment to be maintained. Collecting statistics on attribute information (such as a type, a time, or weather) of the historical pollution event occurring in each historical pollution region can obtain through analysis a pollution pattern corresponding to the historical pollution region.

S230: Generating, based on the pollution pattern, an environment maintenance strategy for the environment to be maintained.

In some examples, the environment maintenance strategy refers to a maintenance action plan formulated for the environment to be maintained. The environment maintenance strategy includes at least one of a cleaning strategy and an inspection strategy. The cleaning strategy refers to cleaning parameters and cleaning plans set for different historical pollution regions. The cleaning strategy may include parameters such as a cleaning frequency, a cleaning order, and cleaning intensity. The inspection strategy refers to inspection parameters and inspection plans set for different historical pollution regions. The inspection strategy may include parameters such as an inspection frequency, an inspection route, and an observation behavior frequency.

In an implementation, the cleaning device may dynamically adjust maintenance frequencies for different regions based on the pollution frequency pattern, for example, increasing the maintenance frequency for a high-frequency pollution region; may dynamically adjust cleaning modes for different regions based on the pollution type pattern, for example, configuring a targeted roller-brush cleaning mode for a hair high-frequency region; may schedule a temporary maintenance task at a specific time period based on the pollution time pattern, for example, performing a temporary cleaning sweep of a dining table region after dinner; and may trigger a temporary maintenance task under a specific weather condition based on the pollution weather pattern, for example, performing a temporary water absorption cleaning of an entryway region on a rainy day.

In the technical solution provided in the embodiments of the present disclosure, an environment layout map of an environment to be maintained is acquired, a historical pollution event is mapped onto the environment layout map to obtain a historical pollution region and a pollution pattern thereof, and an environment maintenance strategy is generated based on the pollution pattern. In the method, cumulative data of a historical pollution event is combined with a spatial map to achieve long-term learning and memory of the environment to be maintained, enabling the cleaning device to identify high-frequency pollution regions, predict pollution occurrence trends, and dynamically generate a targeted environment maintenance strategy, thereby improving cleaning efficiency and a degree of intelligence of the cleaning device, and achieving accurate maintenance of the high-frequency pollution regions and proper allocation of maintenance resources.

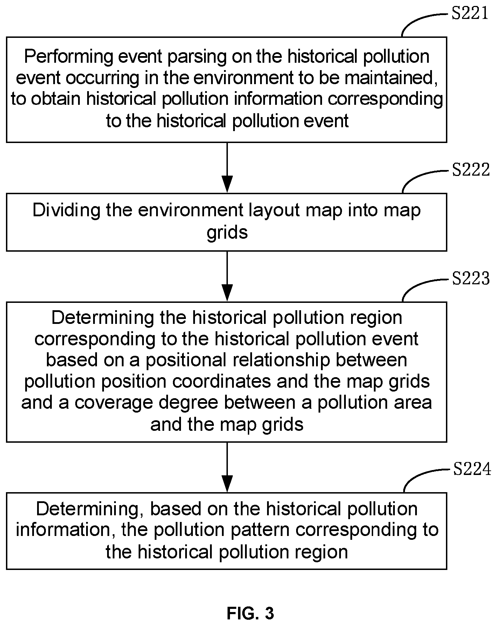

FIG. 3 is a schematic flowchart illustrating step S220 of a method for generating an environment maintenance strategy according to an exemplary embodiment of the present disclosure. Based on the embodiment shown in FIG. 2, step S220 may include the following steps.

S221: Performing event parsing on the historical pollution event occurring in the environment to be maintained, to obtain historical pollution information corresponding to the historical pollution event.

In some examples, event parsing refers to a process of extracting parameterized information from stored historical pollution event records. The historical pollution information refers to parameterized information used to describe characteristics of a pollution event and parsed from a historical pollution event.

In some examples, the historical pollution information involves pollution position coordinates and a pollution area. The pollution position coordinates are used to indicate a specific position at which a pollution event occurs, and may, for example, be represented by coordinate values (x, y) in a global coordinate system in which the environment to be maintained is located.

In an implementation, the pollution position coordinates may be calculated by the cleaning device based on its own positioning system and sensor data when a pollution event is detected.

In some examples, the pollution area is used to indicate a region range covered by a pollution event, and may, for example, be expressed in square meters (m²). The pollution area may be estimated by the cleaning device from a bounding box or a mask image output by a locally deployed object detection model. Exemplarily, the cleaning device may perform, through an object detection model (such as a YOLO model or a segmentation network model), pollutant detection on an environmental image collected by the sensor unit, to obtain bounding box coordinates of a pollutant, and then estimate the pollution area based on a bounding box size and an actual spatial scale.

S222: Dividing the environment layout map into map grids.

In some examples, the map grids refer to a gridded map formed by dividing the environment layout map into a plurality of grid cells according to a preset rule.

In an implementation, the environment layout map may be divided into a uniform N×M grid, with each grid cell Grid(x, y) corresponding to a subregion in the environment to be maintained. The purpose of grid division is to discretize a continuous two-dimensional space, so as to facilitate independent statistical collection and analysis of the pollution event for each subregion.

In an implementation, a size of a grid cell may be set based on an area of the environment to be maintained and sensor precision of the cleaning device. For example, for a home environment, the grid cell may be set to a size of 0.5 m x 0.5 m or 1 m x 1 m. Fineness of the grid division affects accuracy of subsequent determination of the pollution region. Finer grids indicate more accurate localization of pollution regions, but more computing resources and storage resources required. The grid cell division size in the present disclosure may be customized based on an actual environment or may be adjusted in real time based on user needs. The present disclosure does not specifically limit a numerical value of the grid cell division size.

S223: Determining the historical pollution region corresponding to the historical pollution event based on a positional relationship between pollution position coordinates and the map grids and a coverage degree between the pollution area and the map grids.

In some examples, the historical pollution region refers to a set of map grids covered by the historical pollution event.

In an implementation, a grid cell to which the pollution position coordinates belong may be determined as a core grid of the historical pollution region, and adjacent grid cells partially or fully covered by the pollution area may also be included in the historical pollution region based on a coverage degree of the pollution area.

Exemplarily, the cleaning device may calculate an overlap ratio, that is, a coverage degree, between the pollution area and each map grid, and when the coverage degree exceeds a preset threshold (for example, 30%), determine the map grid as part of the historical pollution region. In this way, an accurate historical pollution region can be determined based on an actual impact range of a pollution event.

S224: Determining, based on the historical pollution information, the pollution pattern corresponding to the historical pollution region.

In some examples, the cleaning device may collect statistics on historical pollution information corresponding to all historical pollution events occurring in each historical pollution region within a historical time period, and analyze, based on the historical pollution information, a distribution pattern in dimensions such as pollution type, frequency, time, and weather, so as to obtain a pollution pattern of the historical pollution region.

In the technical solution provided in the embodiments of the present disclosure, event parsing is performed on the historical pollution event to obtain structured historical pollution information, an environment layout map is divided into map grids, a historical pollution region is determined based on a coverage degree between pollution position coordinates and a pollution area, and then a pollution pattern is determined based on the historical pollution information, thereby achieving accurate mapping from historical pollution event data to gridded pollution region, as well as effective extraction of a pollution pattern from historical pollution information. The gridded mapping approach makes boundaries of the pollution region more accurate, effectively distinguishing between different pollution characteristics of adjacent regions, and thus providing a data basis for subsequent generation of differentiated environment maintenance strategies, thereby improving pertinence and effectiveness of the environment maintenance strategies.

In some examples, the historical pollution information may further involve at least one of a pollution type, a time at which pollution occurred, and weather at the time the pollution occurred. The pollution type refers to a type of a pollutant of a pollution event, for which, reference may be made to the foregoing embodiments, and details are omitted herein.

In an implementation, the cleaning device may further perform semantic annotation on pollutants, for example, hair (Hair), cat litter (Cat_Litter), liquid (Liquid), and food residues (Food), so as to facilitate rapid classification of pollutant types based on semantic understanding. Exemplarily, cat litter (Cat_Litter) and food residues (Food) are rapidly classified as pollutants of a particulate pollution type.

In some examples, the time at which pollution occurred refers to a timestamp at which the pollution event was detected. The weather at the time the pollution occurred refers to an external weather condition at the time the pollution event occurred, for example, sunny, rainy, or cloudy.

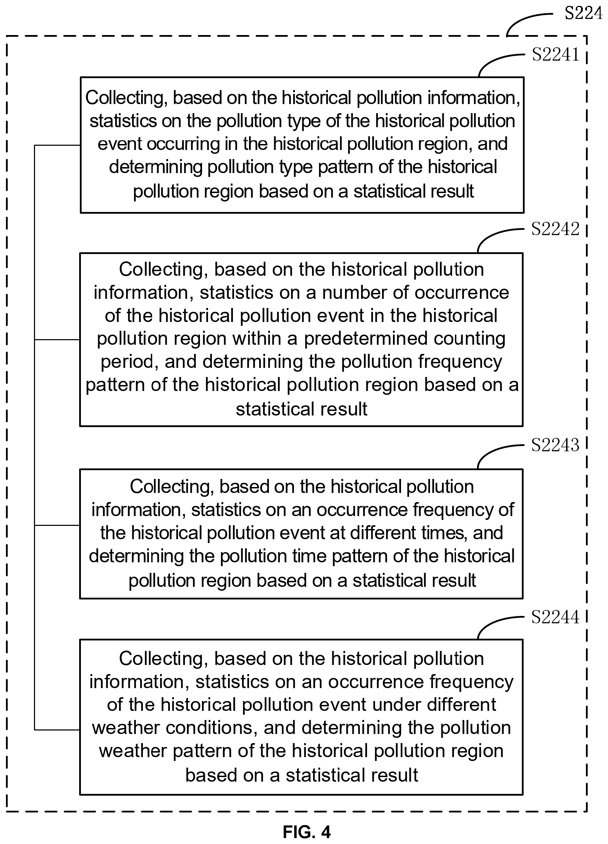

FIG. 4 is a schematic flowchart illustrating step S224 of a method for generating an environment maintenance strategy according to an exemplary embodiment of the present disclosure.

As shown in FIG. 4, based on the embodiment shown in FIG. 3, step S224 may include at least one of steps S2241 to S2244.

S2241: Collecting, based on the historical pollution information, statistics on the pollution type of the historical pollution event occurring in the historical pollution region, and determining the pollution type pattern of the historical pollution region based on a statistical result.

In some examples, the cleaning device may collect, based on the pollution type in the historical pollution information, statistics on numbers of occurrence times of various types of pollution events occurring in a historical pollution region during an observation period, to determine a primary pollution type in the region. For example, if statistics show that, among a plurality of historical pollution events occurring in a region near a cat litter box over the past month, a cat-litter pollution event accounts for the highest proportion, a pollution type pattern of this region is "a high-incidence region of cat-litter pollution". For another example, if statistics from the cleaning device show that, among a plurality of historical pollution events occurring in a region near a sofa over the past month, a hair pollution event accounts for the highest proportion, a pollution type pattern of this region is "high-incidence region of hair pollution".

In some examples, the pollution type pattern may further include an association relationship between different pollution types. For example, in a kitchen region, liquid pollution and food-residue pollution may be correlated, as liquid spills increase an adhesion probability of food residues. A large language model may analyze such cross-type association patterns based on historical pollution events, providing a specific basis for generating a comprehensive environment maintenance strategy.

S2242: Collecting, based on the historical pollution information, statistics on a number of occurrence of the historical pollution event in the historical pollution region within a predetermined counting period, and determining the pollution frequency pattern of the historical pollution region based on a statistical result.

In some examples, the predetermined counting period refers to a time window for performing frequency statistics, which may be set based on actual needs, for example, daily, weekly, or monthly. The pollution frequency pattern reflects a frequency at which a pollution event occurs in a specific historical pollution region.

In an implementation, the cleaning device may collect, with a week as a counting period based on the occurrence frequency of pollution events in the historical pollution information, statistics on the number of occurrence times of pollution events in each historical pollution region per week. If an average number of occurrence times of pollution events per week in a region is relatively high (for example, the number of occurrence times is greater than a preset high-frequency threshold), the region is a "high-frequency pollution region". For example, assuming that the preset high-frequency threshold is an average of 10 occurrence times per week, if a region near a cat litter box has an average of at least eight cat-litter pollution events per week and an average of at least six liquid pollution events per week, totaling an average of 14 pollution events per week, which is greater than the preset high-frequency threshold, the cleaning device may mark the region near the cat litter box as a high-frequency pollution region.

If an average number of occurrence times of pollution events per week in a region is relatively low (for example, the number of occurrence times is lower than a preset low-frequency threshold), the region is a "low-frequency pollution region". For example, assuming that the preset low-frequency threshold is an average of three occurrence times per week, if a bedroom region has an average of one or two pollution events per week, which is less than the preset low-frequency threshold, the cleaning device may mark the bedroom region as a low-frequency pollution region. Through analysis of the pollution frequency pattern, a data basis can be provided for subsequent dynamic adjustment of the inspection frequency and the cleaning frequency, that is, increasing the maintenance frequency for high-frequency pollution regions and reducing the maintenance frequency for low-frequency pollution regions, thereby achieving proper resource allocation.

In an implementation, the pollution frequency pattern may further include a frequency change trend. For example, if a pollution frequency of a region has been increasing over the past three months, the cleaning device should increase a maintenance frequency for the region in advance. Through trend analysis, early warning and proactive prevention of pollution risks can be achieved.

S2243: Collecting, based on the historical pollution information, statistics on an occurrence frequency of the historical pollution event at different times, and determining the pollution time pattern of the historical pollution region based on a statistical result.

In some examples, the pollution time pattern refers to a pattern of change in the probability of occurrence of pollution events over time in a specific historical pollution region.

In an implementation, a day may be divided into a plurality of time periods (for example, morning, late morning, afternoon, evening, and night), and the number of occurrence times of historical pollution events within whenever period may be separately counted, so as to determine a high-incidence time period of pollution for the region.

It should be noted that the above division of time periods is merely an exemplary illustration, and a user may change a rule for dividing time periods based on actual needs, for example, dividing by hour. The embodiments of the present disclosure do not specifically limit the rule for dividing time periods.

In an implementation, the cleaning device may collect, based on the time at which pollution occurred in the historical pollution information, statistics on occurrence frequencies of the historical pollution events at different times. For example, through statistical analysis, it is found that an occurrence frequency of pollution events in a region under a dining table during a dinner time period (for example, 18:00-20:00) is significantly higher than an occurrence frequency of pollution events during other time periods, mainly manifested as an increase in food-residue-type pollution events. In this case, the pollution time pattern for the region is "high incidence of pollution after dinner". Based on the pollution time pattern, the environment maintenance strategy may trigger a temporary maintenance task when the high-incidence time period of pollution approaches, so as to perform cleaning immediately before or after the pollution occurs, thereby effectively reducing diffusion of pollutants and secondary pollution in the environment to be maintained.

S2244: Collecting, based on the historical pollution information, statistics on an occurrence frequency of the historical pollution event under different weather conditions, and determining the pollution weather pattern of the historical pollution region based on a statistical result.

In some examples, the pollution weather pattern refers to a pattern in which a probability of occurrence of pollution events in a specific historical pollution region varies with external weather conditions.

In an implementation, weather conditions may be divided into categories such as sunny, cloudy, rainy, and snowy, and the number of occurrence times of historical pollution events under each weather condition may be separately counted, so as to determine a weather condition of high pollution incidence for the region.

In some examples, the cleaning device may collect, based on the weather at the time pollution occurred in the historical pollution information, statistics on occurrence frequencies of the historical pollution events under different weather conditions. Exemplarily, if an occurrence frequency of water-accumulation events in an entryway region under a rainy condition is significantly higher than under a sunny condition, the pollution weather pattern for the entryway region is "high-incidence of pollution on rainy days". For another example, an occurrence frequency of a dust-deposition event in a balcony region under a windy and sandy weather condition is relatively high.

In some examples, the control device may acquire real-time weather data through a network interface based on the pollution weather pattern, and when it is detected that a current weather condition matches a weather condition of high pollution incidence for a certain region, actively trigger a temporary inspection or cleaning task for the region, thereby achieving preventive environment maintenance based on weather forecasting.

In the technical solution provided in the embodiments of the present disclosure, statistical analysis is performed on historical pollution information from multiple dimensions such as pollution type, pollution frequency, pollution time, and pollution weather, and a pollution type pattern, a pollution frequency pattern, a pollution time pattern, and a pollution weather pattern are respectively determined, achieving multi-dimensional analysis of pollution pattern of historical pollution events, so that an environment maintenance strategy is supported by multi-dimensional data under a variety of different conditions, thereby improving a degree of intelligence and cleaning efficiency of a cleaning device.

In some examples, the historical pollution information further involves a historical maintenance strategy and a historical maintenance result, the historical maintenance result being that a preset requirement is met or that the preset requirement is not met.

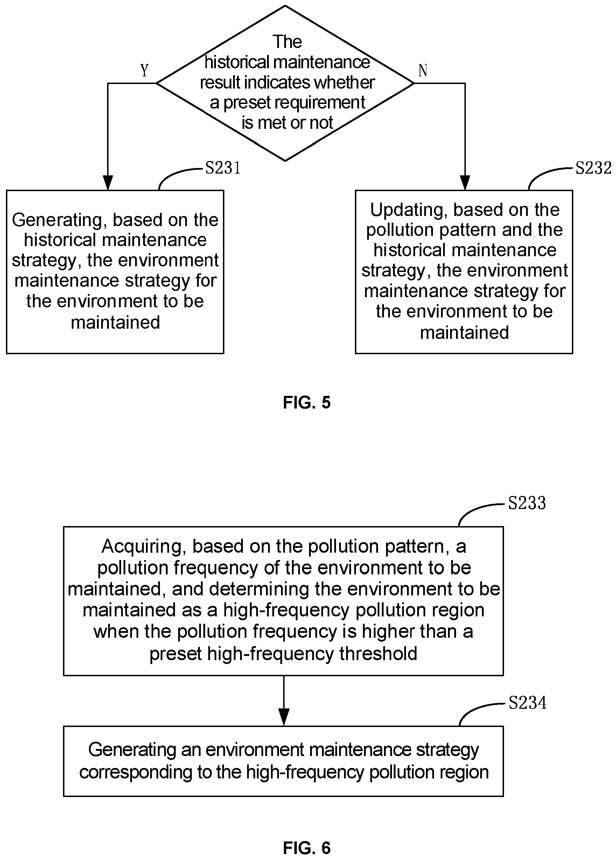

FIG. 5 is a first schematic flowchart illustrating step S230 of a method for generating an environment maintenance strategy according to an exemplary embodiment of the present disclosure.

As shown in FIG. 5, based on the embodiment shown in FIG. 3, step S230 may include the following steps:
S231: When the historical maintenance result is that the preset requirement is met, generating, based on the historical maintenance strategy, the environment maintenance strategy for the environment to be maintained.

In some examples, the historical maintenance strategy refers to an environment maintenance plan adopted for a historical pollution event. The historical maintenance strategy may include cleaning strategy parameters (for example, a cleaning frequency and a cleaning mode) and/or inspection strategy parameters (for example, an inspection frequency and an inspection route).

In some examples, the historical maintenance result refers to an effect evaluation result obtained after performance of the historical maintenance strategy. A maintenance effect may be determined by the cleaning device by performing a secondary detection of the region after performance of the maintenance task.

A preset requirement refers to a standard by which the maintenance effect reaches an expected goal, for example, a pollution region being completely cleaned, or a residual pollutant area being lower than a preset threshold. If the historical maintenance result is that the preset requirement is met, it indicates that the historical maintenance strategy is effective for the region, so that a current environment maintenance strategy can be directly generated based on the historical maintenance strategy.

In an implementation, when the historical maintenance result is that the preset requirement is met, the cleaning device may generate, based on the historical maintenance strategy, the environment maintenance strategy for the environment to be maintained, so that the environment maintenance strategy also enables a current maintenance result to meet the preset requirement.

In another implementation, when generating, based on the historical maintenance strategy, the environment maintenance strategy for the environment to be maintained, the cleaning device may also perform fine tuning in combination with a current actual condition. For example, if a current pollution area is larger than a historical pollution area, cleaning intensity may be appropriately increased or a cleaning time may be extended based on the historical maintenance strategy. If new furniture or obstacles have been added to a current region, the inspection route may be adjusted accordingly. This retains the reuse of an effective strategy while adapting to changes in the environment.

S232: When the historical maintenance result is that the preset requirement is not met, updating, based on the pollution pattern and the historical maintenance strategy, the environment maintenance strategy for the environment to be maintained.

In another example, if the historical maintenance result is that the preset requirement is not met, it indicates that the original historical maintenance strategy is not effective and needs to be adjusted and optimized. In this case, the cleaning device may update, based on the pollution pattern and the historical maintenance strategy, the environment maintenance strategy for the environment to be maintained.

In an implementation, a method for updating the environment maintenance strategy may include: analyzing causes of maintenance failures, for example, insufficient cleaning intensity, an insufficient inspection frequency, or a cleaning mode not suitable for a current pollution type; and then adjusting relevant parameters in the maintenance strategy based on the pollution pattern and the causes of failures. For example, if analysis shows that a cause of a cleaning failure in a cat-litter region is that a roller-brush rotation speed of the actuator is too low to make cat litter fully sucked into a dust box, the roller-brush rotation speed may be increased. If analysis shows that a cause of a failure in cleaning water accumulation in an entryway region is that a water absorption function of the actuator is not activated, an instruction to activate the water absorption function may be added to a maintenance strategy for the entryway region.

In an implementation, in a process of updating the environment maintenance strategy, a large language model may be used for intelligent analysis. The historical maintenance strategy, the historical maintenance result, and a current pollution pattern may be input to the large language model, which may analyze a cause of a maintenance failure based on semantic understanding and generate updated maintenance strategy parameters. For example, the large language model may output updated behavior state machine parameters, including a roller-brush on/off state, a mopping on/off state, a water-pump on/off state, a water-absorption-mode on/off state, a travel speed level, and the like, to control the cleaning device to perform updated maintenance behaviors in a refined way.

In the technical solution provided in the embodiments of the present disclosure, an effective historical maintenance strategy is directly reused when a historical maintenance result is that a preset requirement is met, and the strategy is updated based on a pollution pattern and the historical maintenance strategy when the preset requirement is not met, achieving adaptive optimization and closed-loop feedback of an environment maintenance strategy, allowing a cleaning device to have a capability of self-learning and continuous improvement, and gradually enhancing an autonomous decision-making capability and a long-term operating effect of the cleaning device, thereby resolving a problem that prior cleaning devices cannot continuously update a strategy based on historical maintenance effects.

FIG. 6 is a second schematic flowchart illustrating step S230 of a method for generating an environment maintenance strategy according to an exemplary embodiment of the present disclosure.

As shown in FIG. 6, based on the embodiment shown in FIG. 2, step S230 may include the following steps:
S233: Acquiring, based on the pollution pattern, a pollution frequency of the environment to be maintained, and determining the environment to be maintained as a high-frequency pollution region when the pollution frequency is higher than a preset high-frequency threshold.

In some examples, the cleaning device may acquire the pollution frequency from the pollution frequency pattern in the pollution pattern.

The preset high-frequency threshold is a frequency boundary value used to distinguish a high-frequency pollution region from an ordinary pollution region, and may be set based on actual needs. For example, the preset high-frequency threshold may be set to an average of 10 occurrence times per week. When the pollution frequency is higher than the preset high-frequency threshold, the environment to be maintained is determined as a high-frequency pollution region. Exemplarily, when an average number of occurrence times of pollution events per week in a region exceeds 10, the region is determined as a high-frequency pollution region. The high-frequency pollution region typically corresponds to a region with concentrated pollution events that requires focused attention and maintenance, such as a region around a cat litter box, an entryway, or a region under a dining table.

In an implementation, the preset high-frequency threshold is not necessarily fixed and may be dynamically adjusted based on an overall pollution level of the environment to be maintained. For example, during seasonal transitions, due to an increase in pet shedding, an overall environmental pollution frequency may rise, in which case the preset high-frequency threshold may be appropriately increased to avoid too many regions being marked as high-frequency pollution regions, which would cause excessive dispersion of maintenance resources. For another example, during a holiday period, an increase in indoor activities may cause a temporary rise in the pollution frequency of some regions, and the system may dynamically adjust the threshold based on a short-term trend, making identification of high-frequency pollution regions more flexible and accurate.

S234: Generating an environment maintenance strategy corresponding to the high-frequency pollution region.

After determining the high-frequency pollution region, the cleaning device may generate an environment maintenance strategy for the high-frequency pollution region, wherein a maintenance frequency of the environment maintenance strategy for the high-frequency pollution region is greater than a preset maintenance frequency. The preset maintenance frequency refers to a standard frequency for performing environment maintenance on an ordinary region, for example, once a week for an ordinary region.

For a high-frequency pollution region, the generated maintenance strategy should raise the maintenance frequency to a level greater than the preset maintenance frequency, for example, once a day or once every half-day. Specific increase magnitude of the maintenance frequency may be determined based on a numerical value of the pollution frequency. A higher pollution frequency indicates greater increase magnitude of the maintenance frequency.

In an implementation, when generating the environment maintenance strategy corresponding to the high-frequency pollution region, the cleaning device may also simultaneously adjust the inspection strategy. For example, the inspection frequency for the high-frequency pollution region may be increased, so that the cleaning device visits the high-frequency pollution region and detects a pollution status more frequently during navigation.

In addition, the cleaning device may also adjust the inspection route, and set the high-frequency pollution region as a priority access node of the inspection route, to ensure that the cleaning device covers the high-frequency pollution region first in each inspection task. For an extremely high-frequency pollution region (for example, a region whose pollution frequency exceeds a preset extremely-high threshold), a dedicated inspection mode may also be configured, that is, the cleaning device performs an independent inspection and cleaning task for the region in addition to regular cleaning tasks.

In an implementation, the maintenance strategy for the high-frequency pollution region may further include adjustment of an observation behavior frequency. An observation behavior refers to a behavior of the cleaning device performing non-contact detection of a pollution status of a region through a sensor (for example, an RGB camera). For a high-frequency pollution region, the observation behavior frequency may be increased, so that the cleaning device actively performs image capture and pollution detection whenever it approaches the region, so as to promptly detect a newly occurring pollution event and trigger a cleaning task.

In the technical solution provided in the embodiments of the present disclosure, a high-frequency pollution region is identified based on a pollution frequency, and an environment maintenance strategy with a maintenance frequency greater than a preset maintenance frequency is generated for the high-frequency pollution region, achieving dynamic allocation of maintenance resources, so that the high-frequency pollution region receives more frequent maintenance, thereby improving maintenance efficiency for the high-frequency pollution region and properness of maintenance resource allocation.

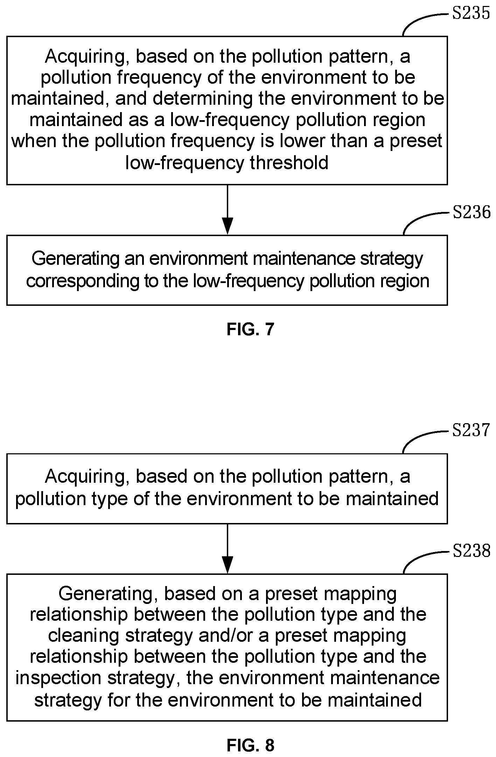

FIG. 7 is a third schematic flowchart illustrating step S230 of a method for generating an environment maintenance strategy according to an exemplary embodiment of the present disclosure.

As shown in FIG. 7, based on the embodiment shown in FIG. 2, step S230 may include the following steps:
S235: Acquiring, based on the pollution pattern, a pollution frequency of the environment to be maintained, and determining the environment to be maintained as a low-frequency pollution region when the pollution frequency is lower than a preset low-frequency threshold.

For an implementation of acquiring the pollution frequency, reference may be made to the foregoing embodiments, which will not be repeated herein.

The preset low-frequency threshold is a frequency boundary value used to distinguish a low-frequency pollution region from an ordinary pollution region. When the pollution frequency is lower than the preset low-frequency threshold, the environment to be maintained is determined to be a low-frequency pollution region. For example, the preset low-frequency threshold may be set to an average of three occurrence times per week. When an average number of occurrence times of pollution events per week in a region is less than 3, the region is determined as a low-frequency pollution region. The low-frequency pollution region typically corresponds to a region with extremely infrequent pollution events, for which regular maintenance is sufficient to meet cleaning needs, such as a guest room, a storage room, or another indoor space that is used less frequently.

S236: Generating an environment maintenance strategy corresponding to the low-frequency pollution region.

For a low-frequency pollution region, the generated maintenance strategy should lower the maintenance frequency to a level less than the preset maintenance frequency, for example, once every two weeks or once a month. Lowering the maintenance frequency for the low-frequency pollution region allows saved maintenance resources (for example, a battery capacity, time, or consumables) to be allocated to a high-frequency pollution region, so as to focus on the maintenance effect of the high-frequency pollution region.

In an implementation, the maintenance strategy for the low-frequency pollution region may further include a reduction in an inspection frequency. During routine navigation, the cleaning device may reduce the frequency of visiting the low-frequency pollution region, or may set an inspection priority of the low-frequency pollution region to the lowest level, placing the low-frequency pollution region at the end of its navigation route planning. This can reduce the time the cleaning device spends on the low-frequency pollution region, allowing more time to be devoted to the maintenance of high-frequency pollution regions.

In the technical solution provided in the embodiments of the present disclosure, a low-frequency pollution region is identified based on a pollution frequency, and an environment maintenance strategy with a maintenance frequency less than a preset maintenance frequency is generated for the low-frequency pollution region, thereby concentrating saved resources on maintenance of a high-frequency pollution region, and improving maintenance efficiency for high-frequency pollution regions and a resource utilization rate of a cleaning device.

FIG. 8 is a fourth schematic flowchart illustrating step S230 of a method for generating an environment maintenance strategy according to an exemplary embodiment of the present disclosure.

As shown in FIG. 8, based on the embodiment shown in FIG. 2, step S230 may include the following steps:

S237: Acquiring, based on the pollution pattern, a pollution type of the environment to be maintained.

In some examples, the cleaning device may acquire the pollution type of the environment to be maintained from the pollution type pattern in the pollution pattern.

In an implementation, a region may correspond to a plurality of primary pollution types, for example, a kitchen region may simultaneously have liquid pollution (water stains and oil stains) and solid particulate pollution (food residues). Based on this, an environment maintenance strategy for a specific region (for example, a kitchen region) may be generated in a targeted manner in combination with one or more primary pollution types.

S238: Generating, based on a preset mapping relationship between the pollution type and the cleaning strategy and/or a preset mapping relationship between the pollution type and the inspection strategy, the environment maintenance strategy for the environment to be maintained.

In some examples, the preset mapping relationship refers to a pre-established correspondence between pollution types and cleaning strategy parameters and/or inspection strategy parameters. Different pollution types have different requirements for cleaning strategy parameters of the cleaning device. For example, hair-type pollution requires activating the roller brush and running it at a relatively high rotation speed to draw hair into the dust box; liquid-type pollution requires deactivating the roller brush to prevent the roller brush from spreading the liquid and causing secondary pollution, deactivating the water pump to prevent a further increase in humidity, and activating a water absorption mode to draw the liquid into a wastewater tank; particulate-type pollution (such as cat litter) requires activating the roller brush and running it at a standard rotation speed to ensure that the particles are effectively suctioned; and adherent-type pollution (such as vomit) requires deactivating the roller brush, deactivating mopping, reducing the travel speed, and using a detour strategy to enter the pollution region, so as to prevent the pollutant from adhering to the device and causing secondary pollution.

In an implementation, inspection strategy parameters for the cleaning device also vary depending on different pollution types. For example, for a high-incidence region of hair-type pollution, the inspection strategy may include increasing an image capture frequency of the vision sensor, while also using an infrared camera to perform detection in low-light environments. For a high-incidence region of adherent-type pollution, the inspection strategy may include increasing sensitivity of image detection during inspection, so as to detect small-area adherent pollution as early as possible.

Based on the preset mapping relationship, the cleaning device may generate, for pollution types corresponding to different regions, different environment maintenance strategies (cleaning strategies and inspection strategies) for the different regions, and aggregate the environment maintenance strategies for the different regions to obtain the environment maintenance strategy for the environment to be maintained. Exemplarily, for a hair type corresponding to a cat-litter-box region, a cleaning strategy of activating the roller brush and running it at a relatively high rotation speed is adopted, and an inspection strategy of increasing the image capture frequency of the vision sensor and using an infrared camera to perform detection in low-light environments is used.

The above is merely an exemplary illustration of different pollution types corresponding to different regions. In practical scenarios, a corresponding cleaning strategy and inspection strategy may be determined in the mapping relationship based on a corresponding pollution type to generate an environment maintenance strategy for the region. This is not limited herein.

In the technical solution provided in the embodiments of the present disclosure, an environment maintenance strategy is generated based on a preset mapping relationship between a pollution type and a cleaning strategy and/or an inspection strategy, achieving differentiated maintenance for different pollution types. Each pollution type can obtain a compatible cleaning mode and inspection mode, improving adaptability and compatibility of maintenance for different pollution types.

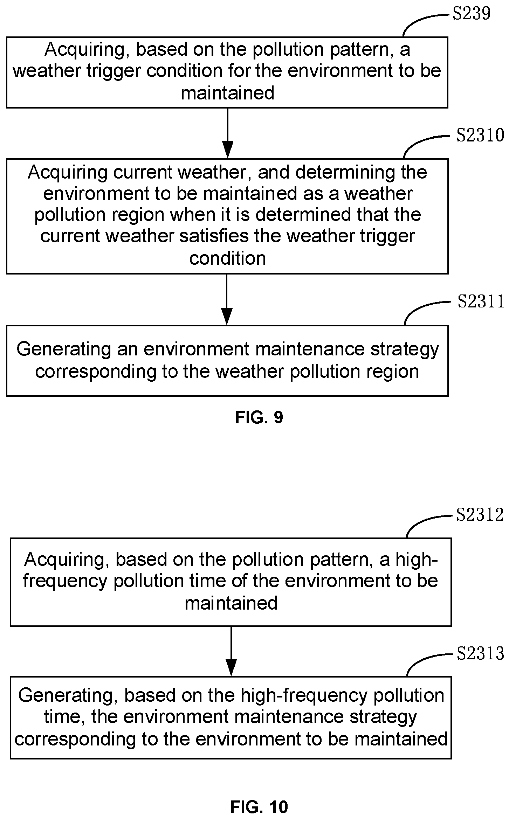

FIG. 9 is a fifth schematic flowchart illustrating step S230 of a method for generating an environment maintenance strategy according to an exemplary embodiment of the present disclosure.

As shown in FIG. 9, based on the embodiment shown in FIG. 2, step S230 may include the following steps:
S239: Acquiring, based on the pollution pattern, a weather trigger condition for the environment to be maintained.

In some examples, the weather trigger condition refers to a weather condition capable of triggering generation or adjustment of an environment maintenance strategy.

In an implementation, the cleaning device may derive the weather trigger condition from the pollution weather pattern in the pollution pattern. For example, through analysis of a pollution weather pattern of an entryway region, it is found that the probability of occurrence of a water-accumulation event in the region under a rainy condition is significantly higher than under a non-rainy condition. In this case, "current weather is rainy" may be determined as a weather trigger condition for the region. For another example, through analysis of a pollution weather pattern of a balcony region, it is found that the probability of occurrence of a dust-deposition event in the region is relatively high under a windy and sandy weather condition. In this case, "current weather is windy and sandy" may be determined as a weather trigger condition for the region.

In an implementation, the weather trigger condition is not limited to a single weather condition, and may also be a combination of a plurality of weather conditions or a weather change trend. For example, "rain for two consecutive days" or "a shift from sunny to cloudy and rainy weather" may serve as a weather trigger condition, so as to more accurately reflect an actual impact of weather changes on an environmental pollution state.

S2310: Acquiring current weather, and determining the environment to be maintained as a weather pollution region when it is determined that the current weather satisfies the weather trigger condition.

In some examples, the current weather refers to a real-time external weather condition.

In an implementation, the control device may access a meteorological service platform through a network interface, such as a China Meteorological Administration weather API (Application Programming Interface) or a third-party meteorological data service, to acquire weather data for a current position in real time, including information such as a weather type (sunny, cloudy, rainy, or snowy), a temperature, humidity, and a wind force.

The control device may then match acquired current weather against the weather trigger condition, and if the current weather satisfies the weather trigger condition, control the cleaning device to determine the environment to be maintained as a weather pollution region. The weather pollution region refers to a region whose pollution frequency has increased due to a change in weather conditions.

S2311: Generating an environment maintenance strategy corresponding to the weather pollution region.

In some examples, after determining the weather pollution region, the cleaning device may generate an environment maintenance strategy corresponding to the weather pollution region, wherein the environment maintenance strategy includes setting a temporary maintenance task for the weather pollution region. The temporary maintenance task refers to an environment maintenance task added temporarily in addition to a regular maintenance task, and may include a temporary cleaning task, for example, performing temporary water absorption cleaning in an entryway region, and may also include a temporary inspection task, for example, performing a temporary inspection of an entryway floor to detect presence of moisture or pollution. A temporary maintenance task may be performed when the weather trigger condition is satisfied, or within a preset time window after a weather change (for example, within 30 minutes after rain stops).

In an implementation, specific parameters of the temporary maintenance task may be customized based on the weather condition and regional features. For example, a temporary maintenance task for an entryway region triggered by rainy weather may be configured to deactivate the roller brush, activate the water absorption mode, and travel at a low speed, so as to prevent water stains from spreading to other regions. A temporary maintenance task for a balcony region triggered by windy and sandy weather may be configured to activate the roller brush and increase the suction power, so as to effectively remove sand and dust. A temporary inspection task triggered by snowy weather may be configured to increase the image capture frequency of the vision sensor in the entryway region, so as to promptly detect liquid pollution caused by melting snow.

In an implementation, after being generated, a temporary maintenance task may be inserted into a current task queue of the cleaning device, and its priority may be adjusted based on its urgency. For example, when the current weather is heavy rain and water accumulation or water stains have been detected in the entryway region, the temporary maintenance task should be set to the highest priority, thereby interrupting the current cleaning task and performing the temporary maintenance task instead. If the current weather is only light rain and no pollution has been detected in the entryway region, the temporary maintenance task may be placed at the end of the task queue and performed after the cleaning of the current region is completed.

In the technical solution provided in the embodiments of the present disclosure, a weather trigger condition is obtained based on a pollution weather pattern, current weather is acquired, and an environment maintenance strategy including a temporary maintenance task is generated when a condition is satisfied, achieving weather-adaptive adjustment of the environment maintenance strategy, so that a cleaning device has a capability to change the environment maintenance strategy based on changes in weather conditions, allowing for timely cleaning of environmental pollution caused by weather factors, thereby improving timeliness and preventive nature of environment maintenance.

FIG. 10 is a sixth schematic flowchart illustrating step S230 of a method for generating an environment maintenance strategy according to an exemplary embodiment of the present disclosure.

As shown in FIG. 10, based on the above embodiment shown in FIG. 2, step S230 may include the following steps:
S2312: Acquiring, based on the pollution pattern, a high-frequency pollution time of the environment to be maintained.

In some examples, the high-frequency pollution time refers to a time period during which a probability of occurrence of a pollution event in a specific environment to be maintained is higher than in other time periods.

In an implementation, the cleaning device may directly acquire the high-frequency pollution time from the pollution time pattern in the pollution pattern. For example, analysis of historical pollution data for a region under a dining table reveals that a food-residue pollution event occurs several times more frequently during a dinner time period (18:00-20:00) than during other time periods. In this case, "18:00-20:00" may be determined as a high-frequency pollution time for this region. For another example, analysis of historical pollution data for a region around a cat litter box reveals that a pet is more likely to use the cat litter box after eating in the morning (06:00-08:00) and in the evening (17:00-19:00). Therefore, these two time periods are high-frequency time periods for cat-litter-scattering pollution.

In an implementation, the high-frequency pollution time may change due to factors such as season and user living habits. Therefore, the historical pollution data may be periodically (for example, monthly) reanalyzed to update the high-frequency pollution time for each region, so as to ensure that the pollution time pattern remains synchronized with actual pollution statuses.

S2313: Generating, based on the high-frequency pollution time, the environment maintenance strategy corresponding to the environment to be maintained.

In some examples, after acquiring the high-frequency pollution time, the cleaning device may generate an environment maintenance strategy corresponding to the environment to be maintained, wherein the environment maintenance strategy includes setting, for the high-frequency pollution time, a temporary maintenance task for the environment to be maintained.

In an implementation, the temporary maintenance task, which is set for the environment to be maintained for the high-frequency pollution time, may be a preventive inspection task performed before the start of the high-frequency pollution time, or a targeted cleaning task performed after the end of the high-frequency pollution time. For example, before the start of the dinner time period (18:00), the cleaning device may perform a pre-cleaning of the region under the dining table to remove pollutants that may remain from a previous meal. After the end of the dinner time period (20:00), the cleaning device may perform a cleaning of the region under the dining table to remove newly generated food residues and the like.

In an implementation, the timing for performing a temporary maintenance task may be flexibly configured based on actual needs. For example, for a region around a cat litter box, a temporary maintenance task may be configured to be performed after a pet finishes eating, as the probability of cat litter scattering is highest at that time.

In an implementation, the cleaning device may configure independent high-frequency pollution times and corresponding temporary maintenance tasks for different regions, respectively. The cleaning device may match a current time against a configuration for each region to automatically generate a task plan including a plurality of temporary maintenance tasks. When the plurality of temporary maintenance tasks overlap in time, priority ranking may be performed based on pollution degrees and task urgency degrees of the regions, to ensure that a region most in need of maintenance is maintained first. Meanwhile, a frequency and a scope of the temporary maintenance task may be adaptively adjusted based on a resource condition of the cleaning device, such as a remaining battery capacity, to prevent the cleaning device from failing to complete subsequent tasks due to an insufficient battery capacity resulting from overly frequent performance of temporary maintenance tasks.

In the technical solution provided in the embodiments of the present disclosure, a high-frequency pollution time is obtained based on a pollution time pattern, and a temporary maintenance task is set at the high-frequency pollution time, so that a cleaning device has a capability to automatically adjust maintenance based on the pollution time pattern, allowing for timely performance of a maintenance task before and after a pollution-high-occurrence period, achieving a response to an environmental pollution time, and effectively reducing a residence time of pollutants in an environment to be maintained, thereby improving a maintenance response speed and a cleaning effect of the cleaning device.

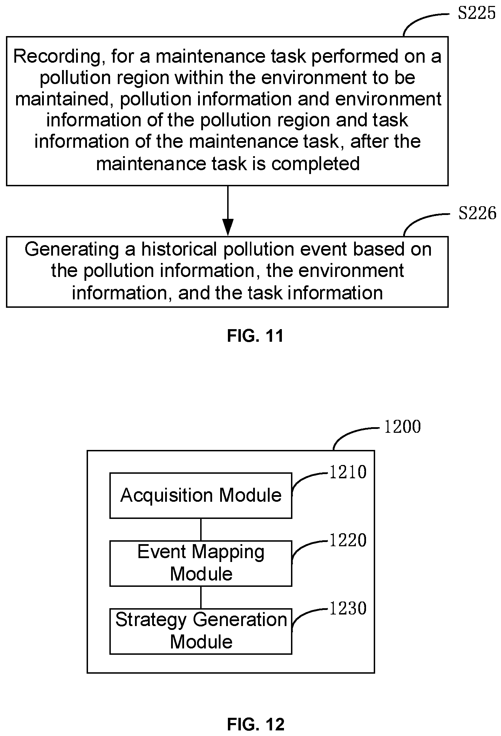

FIG. 11 is a schematic flowchart before step S220 of a method for generating an environment maintenance strategy according to an exemplary embodiment of the present disclosure.

As shown in FIG. 11, based on the embodiment shown in FIG. 2, before step S220, the method may further include the following steps:
S225: recording, for a maintenance task performed on a pollution region within the environment to be maintained, pollution information and environment information of the pollution region and task information of the maintenance task, after the maintenance task is completed.

In some examples, the maintenance task refers to a cleaning task and/or an inspection task performed by the cleaning device on the pollution region in the environment to be maintained. After each maintenance task is completed, the cleaning device records the pollution information and the environment information of the pollution region, as well as the task information of the maintenance task.

In an implementation, the pollution information may include a pollution type, pollution position coordinates, a pollution area, a pollution occurrence time, and the like. A source of the pollution information may be a pollution detection result collected and analyzed by the cleaning device through a sensor during performance of the maintenance task. For example, after capturing a floor image through an RGB camera, the cleaning device uses an object detection model (such as a YOLO model) to detect a pollutant in the image, outputs information such as a type label of the pollutant, bounding box coordinates, and a confidence score, and then converts such information into pollution position coordinates and a pollution area based on the bounding box coordinates and a spatial scale.

In an implementation, the environment information may include a weather condition (for example, sunny, cloudy, or rainy), a lighting condition, temperature, humidity, and the like during performance of the maintenance task. The environment information may be acquired from a meteorological service through a network interface, or may be collected by a sensor (for example, a temperature and humidity sensor) mounted on the cleaning device.

In an implementation, the task information may include maintenance strategy parameters (for example, a cleaning mode, cleaning intensity, and an inspection route) and a maintenance result (for example, a cleaning success or a cleaning failure and a residual pollutant area). The maintenance result may be determined by the cleaning device by performing a secondary detection of the region after the performance of the maintenance task. If a result of the secondary detection shows that all pollutants have been completely removed, the maintenance result is a success. If a result of the secondary detection shows that pollutants remain, the maintenance result is a failure.

S226: Generating the historical pollution event based on the pollution information, the environment information, and the task information.

In some examples, the cleaning device may generate a historical pollution event based on the pollution information, the environment information, and the task information.

In an implementation, the historical pollution event may include the following structured fields: an event identifier (Event_ID), a pollution type (Pollution_Type), pollution position coordinates (Pollution_Position), a pollution area (Pollution_Area), a pollution occurrence time (Pollution_Time), a weather condition (Weather), a maintenance strategy parameter (Maintenance_Strategy), a maintenance result (Maintenance_Result), and the like. The historical pollution event may be stored in a database of the control device, forming a long-term pollution history database for the environment to be maintained.

In an implementation, as historical pollution events continue to accumulate, the cleaning device may periodically perform data cleaning and maintenance on the historical pollution event database, such as deleting expired or invalid records, merging duplicate records, and normalizing data, so as to ensure data quality and consistency of the historical pollution events, thereby providing a reliable data source for subsequent pollution pattern analysis and environment maintenance strategy generation.

In the technical solution provided in this embodiment of the present disclosure, pollution information, environment information, and task information of a pollution region are recorded after each maintenance task is completed, and historical pollution events are generated based on such information, thereby enabling recording and continuous accumulation of an entire historical maintenance process, providing a reliable data source of historical pollution events for subsequent generation of an environment maintenance strategy.

### Exemplary Apparatus

FIG. 12 is a schematic diagram illustrating a structure of an apparatus for generating an environment maintenance strategy according to an exemplary embodiment of the present disclosure.

As shown in FIG. 12, in an embodiment, the apparatus 1200 for generating an environment maintenance strategy includes:
an acquisition module 1210, configured for acquiring an environment layout map corresponding to an environment to be maintained;
an event mapping module 1220, configured for mapping the historical pollution event occurring in the environment to be maintained onto the environment layout map, to obtain a historical pollution region in the environment to be maintained and a pollution pattern corresponding to the historical pollution region, wherein the pollution pattern includes at least one of a pollution type pattern, a pollution frequency pattern, a pollution weather pattern, and a pollution time pattern; and
a strategy generation module 1230, configured for generating, based on the pollution pattern, an environment maintenance strategy for the environment to be maintained, wherein the environment maintenance strategy includes at least one of a cleaning strategy and an inspection strategy.

In an embodiment, the apparatus 1200 for generating an environment maintenance strategy may further include an event recording module, configured for recording the historical pollution event.

In an embodiment, the event recording module may be further configured for storing the historical pollution event.

In the embodiments of the present disclosure, the modules or sub-modules of the apparatus for generating an environment maintenance strategy may be deployed in a cleaning device, or may be deployed in a control device, or may be deployed in a distributed manner across both the cleaning device and the control device. That is, the functions implemented by the apparatus for generating an environment maintenance strategy may be independently implemented by the cleaning device, or independently implemented by the control device, or cooperatively implemented by the cleaning device and the control device, which is not limited by the embodiments of the present disclosure.

For beneficial technical effects corresponding to the exemplary embodiment of this apparatus, refer to the corresponding beneficial technical effects of the exemplary method section described above, which are not repeated herein.

### Exemplary Electronic Device

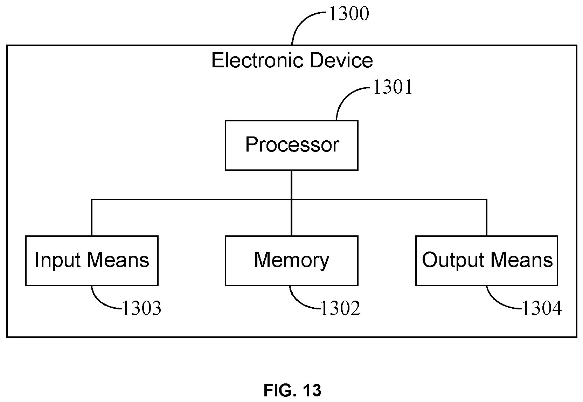

FIG. 13 is a diagram illustrating a structure of an electronic device according to an embodiment of the present disclosure.

As shown in FIG. 13, the electronic device 1300 includes at least one processor 1301 and a memory 1302.

The processor 1301 may be a CPU or another form of processing unit having a data processing capability and/or an instruction execution capability, and may control another component in the electronic device 1300 to perform a desired function.

The memory 1302 may include one or more computer program products. The computer program product may include various forms of computer readable storage media, such as a volatile memory and/or a non-volatile memory. The volatile memory may include, for example, a RAM (Random Access Memory) and/or a cache. The non-volatile memory may include, for example, a ROM (Read-Only Memory), a hard disk, or a flash memory. The computer readable storage medium may store one or more computer program instructions. The processor 1301 may run the one or more computer program instructions to implement the method for generating an environment maintenance strategy and/or other desired functions in the above embodiments of the present disclosure.

In an example, the electronic device 1300 may further include an input means 1303 and an output means 1304. The components are interconnected through a bus system and/or other forms of connection mechanisms (not shown).

The input means 1303 may further include, for example, a keyboard or a mouse.

The output means 1304 may output various information to the outside, and may include, for example, a display, a loudspeaker, a printer, and a communication network and a remote output device connected thereto.

Certainly, for simplicity, only some components in the electronic device 1300 that are related to the present disclosure are shown in FIG. 13, and components such as a bus and an input/output interface are omitted. Besides, the electronic device 1300 may further include any other appropriate components depending on specific applications.

### Exemplary Computer Program Product And Computer Readable Storage Medium

In addition to the above method and device, the embodiments of the present disclosure may also provide a computer program product including computer program instructions that, when run by a processor, cause the processor to perform the steps of the method for generating an environment maintenance strategy according to the embodiments of the present disclosure that is described in the above "Exemplary Method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method for generating an environment maintenance strategy according to the embodiments of the present disclosure that is described in the above "Exemplary Method" section.

The computer readable storage medium may be one readable medium or any combination of a plurality of readable media. The readable medium may be a readable signal medium or a readable storage medium. The readable storage medium includes, for example but not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM) or a flash memory, an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

## Claims

1. A method for generating an environment maintenance strategy, the method comprising:
acquiring (S210) an environment layout map corresponding to an environment to be maintained;
mapping (S220) a historical pollution event occurring in the environment to be maintained onto the environment layout map, to obtain a historical pollution region in the environment to be maintained and a pollution pattern corresponding to the historical pollution region, wherein the pollution pattern comprises at least one of a pollution type pattern, a pollution frequency pattern, a pollution weather pattern, and a pollution time pattern; and
generating (S230), based on the pollution pattern, an environment maintenance strategy for the environment to be maintained, wherein the environment maintenance strategy comprises at least one of a cleaning strategy and an inspection strategy.

2. The method according to claim 1, wherein the mapping (S220) a historical pollution event occurring in the environment to be maintained onto the environment layout map, to obtain a historical pollution region in the environment to be maintained and a pollution pattern corresponding to the historical pollution region comprises:
performing (S221) event parsing on the historical pollution event occurring in the environment to be maintained, to obtain historical pollution information corresponding to the historical pollution event, wherein the historical pollution information involves pollution position coordinates and a pollution area;
dividing (S222) the environment layout map into map grids;
determining (S223) the historical pollution region corresponding to the historical pollution event based on a positional relationship between the pollution position coordinates and the map grids and a coverage degree between the pollution area and the map grids; and
determining (S224), based on the historical pollution information, the pollution pattern corresponding to the historical pollution region.

3. The method according to claim 2, wherein the historical pollution information further involves at least one of a pollution type, a time at which pollution occurred, and weather at the time the pollution occurred, and the determining (S224), based on the historical pollution information, the pollution pattern corresponding to the historical pollution region comprises:
collecting (S2241), based on the historical pollution information, statistics on the pollution type of the historical pollution event occurring in the historical pollution region, and determining the pollution type pattern of the historical pollution region based on a statistical result;
collecting (S2242), based on the historical pollution information, statistics on a number of occurrence of the historical pollution event in the historical pollution region within a predetermined counting period, and determining the pollution frequency pattern of the historical pollution region based on a statistical result;
collecting (S2243), based on the historical pollution information, statistics on an occurrence frequency of the historical pollution event at different times, and determining the pollution time pattern of the historical pollution region based on a statistical result; and
collecting (S2244), based on the historical pollution information, statistics on an occurrence frequency of the historical pollution event under different weather conditions, and determining the pollution weather pattern of the historical pollution region based on a statistical result.

4. The method according to claim 2, wherein the historical pollution information further involves a historical maintenance strategy and a historical maintenance result, the historical maintenance result being that a preset requirement is met or that the preset requirement is not met; and the generating (S230), based on the pollution pattern, an environment maintenance strategy for the environment to be maintained comprises:
when the historical maintenance result is that the preset requirement is met, generating (S231), based on the historical maintenance strategy, the environment maintenance strategy for the environment to be maintained; and
when the historical maintenance result is that the preset requirement is not met, updating (S232), based on the pollution pattern and the historical maintenance strategy, the environment maintenance strategy for the environment to be maintained.

5. The method according to claim 1, wherein the generating (S230), based on the pollution pattern, an environment maintenance strategy for the environment to be maintained comprises:
acquiring (S233), based on the pollution pattern, a pollution frequency of the environment to be maintained, and determining the environment to be maintained as a high-frequency pollution region when the pollution frequency is higher than a preset high-frequency threshold; and
generating (S234) an environment maintenance strategy corresponding to the high-frequency pollution region, wherein a maintenance frequency of the environment maintenance strategy for the high-frequency pollution region is greater than a preset maintenance frequency.

6. The method according to claim 1, wherein the generating (S230), based on the pollution pattern, an environment maintenance strategy for the environment to be maintained comprises:
acquiring (S233), based on the pollution pattern, a pollution frequency of the environment to be maintained, and determining the environment to be maintained as a low-frequency pollution region when the pollution frequency is lower than a preset low-frequency threshold; and
generating (S236) an environment maintenance strategy corresponding to the low-frequency pollution region, wherein a maintenance frequency of the environment maintenance strategy for the low-frequency pollution region is less than a preset maintenance frequency.

7. The method according to claim 1, wherein the generating (S230), based on the pollution pattern, an environment maintenance strategy for the environment to be maintained comprises:
acquiring (S237), based on the pollution pattern, a pollution type of the environment to be maintained; and
generating (S238), based on a preset mapping relationship between the pollution type and the cleaning strategy and/or a preset mapping relationship between the pollution type and the inspection strategy, the environment maintenance strategy for the environment to be maintained, wherein the environment maintenance strategy adopts, for different pollution types, cleaning strategies and/or inspection strategies corresponding to the pollution types.

8. The method according to claim 1, wherein the generating (S230), based on the pollution pattern, an environment maintenance strategy for the environment to be maintained comprises:
acquiring (S239), based on the pollution pattern, a weather trigger condition for the environment to be maintained;
acquiring (S2310) current weather, and determining the environment to be maintained as a weather pollution region when it is determined that the current weather satisfies the weather trigger condition; and
generating (S2311) an environment maintenance strategy corresponding to the weather pollution region, wherein the environment maintenance strategy comprises setting a temporary maintenance task for the weather pollution region.

9. The method according to claim 1, wherein the generating (S230), based on the pollution pattern, an environment maintenance strategy for the environment to be maintained comprises:
acquiring (S2312), based on the pollution pattern, a high-frequency pollution time of the environment to be maintained; and
generating (S2313), based on the high-frequency pollution time, the environment maintenance strategy corresponding to the environment to be maintained, wherein the environment maintenance strategy comprises setting, for the high-frequency pollution time, a temporary maintenance task for the environment to be maintained.

10. The method according to claim 2, wherein before the mapping (S220) a historical pollution event occurring in the environment to be maintained onto the environment layout map, to obtain a historical pollution region in the environment to be maintained and a pollution pattern corresponding to the historical pollution region, the method further comprises:
recording (S225), for a maintenance task performed on a pollution region within the environment to be maintained, pollution information and environment information of the pollution region and task information of the maintenance task, after the maintenance task is completed; and
generating (S226) the historical pollution event based on the pollution information, the environment information, and the task information.

11. An apparatus (1200) for generating an environment maintenance strategy, the apparatus (1200) comprising:
an acquisition module (1210), configured for acquiring an environment layout map corresponding to an environment to be maintained;
an event mapping module (1220), configured for mapping a historical pollution event occurring in the environment to be maintained onto the environment layout map, to obtain a historical pollution region in the environment to be maintained and a pollution pattern corresponding to the historical pollution region, wherein the pollution pattern comprises at least one of a pollution type pattern, a pollution frequency pattern, a pollution weather pattern, and a pollution time pattern; and
a strategy generation module (1230), configured for generating, based on the pollution pattern, an environment maintenance strategy for the environment to be maintained, wherein the environment maintenance strategy comprises at least one of a cleaning strategy and an inspection strategy.

12. The apparatus (1200) according to claim 11, further comprising:
an event recording module, configured for recording the historical pollution event.

13. The apparatus (1200) according to claim 12, wherein the event recording module is further configured for storing the historical pollution event.

14. A computer readable storage medium, on which a computer program is stored, wherein the computer program, when executed by a processor (1301), causes the processor (1301) to implement the method for generating an environment maintenance strategy according to any one of claims 1 to 10.

15. An electronic device (1300), comprising:
a processor (1301); and
a memory (1302), configured for storing instructions executable by the processor (1301), wherein
the processor (1301) is configured for reading the executable instructions from the memory (1302), and executing the instructions to implement the method for generating an environment maintenance strategy according to any one of claims 1 to 10.
